# EUROPÄISCHE PATENTSCHRIFT

(11) **EP 3 947 997 B1**
(45) Veröffentlichungstag und Bekanntmachung des Hinweises auf die Patenterteilung: **30.08.2023**
(21) Anmeldenummer: 20723976.5
(22) Anmeldetag: 30.03.2020
(51) Int. Cl.: F16C 33/60, F16C 19/16, F16C 33/38, F16C 33/52

(54) **KÄFIGLOSES WÄLZLAGER**
CAGE-FREE ROLLING BEARING
PALIER À ROULEMENTS SANS CAGE

(30) Priorität: 03.04.2019 DE 202019101921 U
(43) Veröffentlichungstag der Anmeldung: 09.02.2022
(73) Patentinhaber: Paul Müller GmbH & Co. KG Unternehmensbeteiligungen, 90411 Nürnberg (DE)
(72) Erfinder: FÖRTSCHBECK, Ewald, 91080 Uttenreuth (DE)
(74) Vertreter: Lösch, Christoph Ludwig Klaus
(86) Internationale Anmeldenummer: PCT/DE2020/100261
(87) Internationale Veröffentlichungsnummer: WO 2020/200365

(56) Entgegenhaltungen:
- US-A- 4 387 938
- US-A1- 2005 069 239

## Beschreibung

Die Erfindung betrifft ein käfigloses Wälzlager, wie es beispielsweise aus der US 4 387 938 A bekannt ist.

Typischerweise werden Wälzlager, die für Anwendungen eingesetzt werden, in denen relativ hohe Drehzahlen (Drehzahlkennwert n x dm > 10.000 mm/min) zu erwarten sind, mit einem Lagerkäfig, in dem die Wälzkörper (Kugeln, Rollen) des Wälzlagers aufgenommen werden, ausgestattet. Durch einen derartigen Lagerkäfig können wirtschaftliche Standzeiten und ein gleichmäßiger Rundlauf erreicht werden. Des Weiteren gewährleistet der Lagerkäfig eine gleichmäßige Beabstandung der Wälzkörper untereinander und verhindert die tribologisch ungünstige Berührung der Wälzkörper während des Betriebs des Wälzlagers.

Es sind auch Wälzlager ohne Lagerkäfig bekannt. Diese Wälzlager werden auch käfiglose Wälzlager genannt. Ein Vorteil dieser käfiglosen Wälzlager ist beispielsweise, dass durch den Verzicht auf den Lagerkäfig mehr Wälzkörper bei gleichbleibenden Abmessungen des Wälzlagers vorhanden sein können, was wiederum die Tragfähigkeit des Wälzlagers erhöht. Derartige Wälzlager werden auch Vollkugellager genannt. Die oben genannten Vorteile eines Wälzlagers mit Lagerkäfig sind jedoch bei den bekannten käfiglosen Wälzlagern gerade nicht gegeben. Der Verzicht auf den Lagerkäfig führt insbesondere bei hohen Drehzahlen zu Problemen. So kann es zu einer Veränderung des Abstands zwischen den einzelnen Wälzkörpern, bis hin zu einem Kontakt zwischen diesen, kommen. Derartige unerwünschte Kontakte wiederum erhöhen den Verschleiß und verringern die Lebensdauer des Wälzlagers.

Der Erfindung liegt die Aufgabe zugrunde, ein käfigloses Wälzlager anzubieten, das einen Kontakt zwischen benachbarten Wälzkörpern während des Betriebs des Wälzlagers weitestgehend unterbindet.

Diese Aufgabe wird durch die Merkmale des Patentanspruchs 1 gelöst. Vorteilhafte Ausführungsformen sind in den Unteransprüchen beschrieben.

Das erfindungsgemäße käfiglose Wälzlager besitzt eine Mehrzahl von Wälzkörpern, welche zwischen einem Innenring und einem konzentrisch zum Innenring angeordneten Außenring in Umfangsrichtung verteilt angeordnet sind, sowie ein Andrückelement. Das Andrückelement ist ringsegmentartig entlang der Umfangsrichtung angeordnet, kontaktiert zeitweise mindestens zwei der Wälzkörper gleichzeitig und beaufschlagt jeden der kontaktierten Wälzkörper mit einer in axiale Richtung orientierten Kraft.

Der Begriff "axiale Richtung" bezieht sich auf die axiale Richtung der konzentrisch angeordneten Innen- und Außenringe des Wälzlagers. Des Weiteren ist die Formulierung "mit einer in axiale Richtung orientierten Kraft" derart zu verstehen, dass die Orientierung, mit der der Wälzkörper durch das Andrückelement beaufschlagt wird, eine Richtungskomponente in axiale Richtung aufweist; damit fällt nicht nur eine exakt axiale Kraft unter diese Definition, sondern auch Kräfte, die neben einer axialen Richtungskomponente auch beispielsweise ein radiale Richtungskomponente aufweisen.

Während des Betriebs des Wälzlagers hat das Andrückelement eine ausgleichende Wirkung auf den Abstand benachbarter Wälzkörper. Ist beispielsweise der Abstand zwischen dem vorauseilenden Wälzkörper und dem nachfolgenden Wälzkörper geringer als der theoretische Abstand, der sich aufgrund einer äquidistanten Verteilung der Wälzkörper ergeben sollte, so ist die abbremsende Wirkung des Andrückelements auf den vorauseilenden Wälzkörper geringer. Der Abstand zwischen diesen Wälzkörpern vergrößert sich entsprechend. Ist der Abstand zwischen dem vorauseilenden Wälzkörper und dem nachfolgenden Wälzkörper hingegen größer als der theoretische Abstand, so ist die abbremsende Wirkung des Andrückelements auf den vorauseilenden Wälzkörper größer. Der Abstand zwischen diesen Wälzkörpern verringert sich entsprechend.

Der Abstand zwischen den einzelnen Wälzkörpern wird somit auf den theoretischen Abstand eingeregelt. Ein Kontakt zwischen benachbarten Wälzkörpern während des Betriebs des Wälzlagers wird damit weitestgehend unterbunden. Die Lebensdauer des Wälzlagers erhöht sich entsprechend und das käfiglose Wälzlager ist insbesondere auch für Anwendungen mit hohen Drehzahlen geeignet.

In einer vorteilhaften Ausführungsform ist das Andrückelement hierbei stationär bzw. stillstehend. Generell steht bei Wälzlagern entweder der Innenring oder der Außenring still, während sich der jeweils andere Ring mit der je nach Anwendungsfall geforderten Geschwindigkeit dreht. Die Wälzkörper rollen während des Betriebs auf den jeweiligen Laufflächen des Innenrings und des Außenrings ab. Des Weiteren können weitere Bauelemente des Wälzlagers, z.B. Deckscheiben, vorhanden sein, die in der Regel ebenfalls still sehen. Stationär bzw. stillstehend bedeutet nun, dass das Andrückelement fest mit einem der stillstehenden Elemente (z.B. dem stillstehenden Ring, der Deckscheibe oder einem benachbarten Bauteil) des Wälzlagers verbunden ist. Es kommt folglich zu einer Relativbewegung der Wälzkörper zu dem Andrückelement. Während der Drehbewegung des Wälzlagers kommen damit reihum sämtliche Wälzkörper nacheinander mit dem Andrückelement in Kontakt. Ein Vorteil der Ausbildung des Andrückelements als stationäres bzw. stillstehendes Andrückelement liegt darin, dass dies aus technischer Sicht relativ einfach zu beherrschen ist.

Es ist jedoch auch möglich, das Andrückelement als rotierendes Andrückelement auszubilden. Hierbei wird das Andrückelement an ein rotierendes Element des Wälzlagers, z.B. an den rotierenden Ring, angebracht. Da der Wälzkörpersatz typischerweise mit etwa mittlerer Drehzahl von Außen- und Innenring umläuft, wäre nahezu dieselbe Relativbewegung zwischen Wälzkörpersatz und Andrückelement gegeben und das Wirkprinzip des Andrückelements wäre nahezu identisch.

Mit anderen Worten übernimmt das Andrückelement die Funktion, die umlaufseitige Beabstandung der Wälzkörper zu regulieren, indem es durch Aufbringen gezielter

Kräfte die Umlaufgeschwindigkeit der Wälzkörper lokal beeinflusst. Dies wird erreicht, indem das Andrückelement in seiner elastischen Gestaltung und elastischen Anstellung so ausgestaltet ist, dass sich eine unterschiedliche Kraftverteilung auf einen voreilenden und einen nacheilenden Wälzkörper einstellen, je nachdem, ob der nacheilende Wälzkörper weiter oder geringer zum voreilenden Wälzkörper beabstandet ist. Beispielsweise bewirkt die Kontaktkraft zwischen Andrückelement und Wälzkörper ein Bremsen der Umlaufgeschwindigkeit des Wälzkörpers, indem die Kraftrichtung axial entgegen einer tragenden Schulter eines Innenrings oder gegen die tragende Außenringschulter des Wälzlagers gerichtet ist. Dadurch kann durch Erhöhung der Kontaktkraft auf einen mit kritischem Abstand angenäherten nacheilenden Wälzkörper eine trennende Wirkung erzielt werden.

Es ergeben sich folgende Vorteile des erfindungsgemäßen käfiglosen Wälzlagers:
- Es kann eine höhere Tragfähigkeit durch eine höhere Wälzkörperanzahl bei Lagern ohne montagebedingte Einschränkung der Packungsdichte, insbesondere bei denen mindestens ein Bord zumindest abschnittsweise abgesetzt ist (z.B. Schrägkugellager, Spindellager, Füllnutlager...) erzielt werden, indem der Platzbedarf für die die Wälzkörper trennenden Zwischenstege des Käfigs wegfallen.
- Es kann eine reduzierte Reibung erreicht werden, indem die Reibstellen zwischen Käfigtaschen und Wälzkörpern, an den Führungsflächen des rotierenden Käfigs und die durch Zwangskräfte bedingten Hystereseverluste im Material des Käfigs entfallen.
- Es entfällt der nichtwiederholbare Schlag bei den Laufeigenschaften des Lagers, welcher durch einen mitrotierenden Käfig, der im Rahmen seiner exzentrischen, rotatorischen und elastischen Freiheit undefiniert läuft, induziert wird.
- Es können günstigere kinematische Verhältnisse beim Abwälzen des Wälzkörpers, bezüglich Bohr- zu Rollverhältnis und Kugel Vor- Nachlauf, durch eine ausgleichende oder reduzierende Wirkung auf die Berührwinkel des Wälzkörpers mit dem Lageraußenring und dem Lagerinnenring, entstehen.

Erfindungsgemäß weist das Andrückelement eine Andrückzunge auf, die in einem ersten Endbereich gelagert ist. Die Lagerung der Andrückzunge erfolgt hierbei in vorteilhafter Weise über einen als Lagerblock fungierenden Fortsatz, über den das Andrückelement drehfest mit einem der stillstehenden Elemente des Wälzlagers oder seiner Umgebung verbunden ist.

Ein zweiter Endbereich der Andrückzunge, welcher dem ersten Endbereich der Andrückzunge gegenüber liegt, ist erfindungsgemäß als freitragendes Ende ausgebildet. Durch die Ausbildung als freitragende Zunge (ähnlich einem Biegebalken) erhält das Andrückelement eine Elastizität, durch die die jeweils kontaktierten Wälzkörper mit einer variablen axialen Kraft beaufschlagt werden. Auf diese Weise kann der Abstand zwischen benachbarten Wälzkörpern besonders exakt geregelt werden.

Der zweite Endbereich der Andrückzunge kann jedoch aus Stabilitätsgründen auch nachgiebig fixiert sein.

In vorteilhafter Weise verjüngt sich der Querschnitt der Andrückzunge, d.h. der Querschnitt der Andrückzunge verringert sich, beginnend vom ersten Endbereich in Richtung des zweiten Endbereichs. Der zweite Endbereich besitzt entsprechend einen kleineren Querschnitt als der erste Endbereich. Auf diese Weise kann die Elastizitätsverteilung bzw. das Biege-Widerstandsmoment des Andrückelements eingestellt werden. Auch diese führt wiederum zu einer besonders exakten Regelung des Abstands zweier benachbarter Wälzkörper. Die Querschnittsverjüngung kann dabei durch die Verringerung der Dicke und/oder der Breite der Andrückzunge erfolgen.

Ferner ist erfindungsgemäß in dem ersten Endbereich der Andrückzunge ein abgeschrägter Anlaufbereich ausgebildet.

Durch diesen abgeschrägten Anlaufbereich erfolgt eine sanfte Einleitung der axialen Kraft zu Beginn des Kontaktes zwischen dem jeweiligen Wälzkörper und dem Andrückelement.

Erfindungsgemäß ist in dem zweiten Endbereich ein abgeschrägter Auslaufbereich ausgebildet.

Durch diesen abgeschrägten Auslaufbereich erfolgt eine sanfte Aufhebung der Krafteinleitung am Ende des Kontaktes zwischen dem jeweiligen Wälzkörper und dem Andrückelement.

In einer weiteren vorteilhaften Ausführungsform ist die Andrückzunge gewölbt bzw. gebogen ausgebildet. Eine derartige Wölbung beeinflusst ebenfalls die elastische Vorspannung (bzw. elastische Anstellung) des Andrückelements und führt daher zu einer besonders exakten Regelung des Abstands zweier benachbarter Wälzkörper.

In einer weiteren vorteilhaften Ausführungsform ist das Andrückelement als wippenförmiges Andrückelement ausgebildet ist, welches in einem Mittelbereich gelagert ist und an beiden Endbereichen entweder nachgiebig fixiert oder vollständig freitragend ist. Auf diese Weise kann das Andrückelement als eine Art elastische Wippe fungieren und ein voreilender Wälzkörper könnte stärker beschleunigt werden, wenn ein nachfolgender Wälzkörper kritisch nahe kommt.

Erfindungsgemäß ist es nötig, dass zeitweise mindestens zwei Wälzkörper gleichzeitig durch das Andrückelement in axiale Richtung mit einer Kraft beaufschlagt werden. Es ist jedoch auch möglich, dass mehr als zwei Wälzkörper gleichzeitig durch das Andrückelement in axiale Richtung mit einer Kraft beaufschlagt werden. Auf diese Weise kann der Abstand über mehrere Wälzkörper hinweg und über einen längeren Zeitraum geregelt werden. Dadurch verringert sich die Möglichkeit eines ungewünschten Kontaktes zwischen benachbarten Wälzkörpern zusätzlich.

Auch ist es möglich, mehrere Andrückelemente über den Umfang verteilt anzuordnen. Auch dadurch verringert sich die Möglichkeit eines ungewünschten Kontaktes zwischen benachbarten Wälzkörpern zusätzlich.

In vorteilhafter Weise ist das Wälzlager als Schrägkugellager ausgebildet. Werden die Wälzkörper durch das Andrückelement in Richtung der Außenringschulter des Schrägkugellagers gedrückt, so ist auf diese Weise eine besonders definierte Krafteinleitung durch das Andrückelement möglich.

Die Erfindung ist anhand von Ausführungsbeispielen in den Zeichnungsfiguren weiter erläutert. Es zeigen:
- Fig. 1: eine Schnittdarstellung eines käfiglosen Wälzlagers;
- Fig. 2: eine Frontansicht des Wälzlagers aus Fig. 1, wobei auf die Darstellung der Deckscheibe verzichtet wird;
- Fig. 3: eines der Andrückelemente aus Fig. 2 in Alleinstellung;
- Fig. 4: eine Seitenansicht des Andrückelements aus Fig. 3;
- Fig. 5: eine Prinzipskizze des Andrückelements mit zwei, das Andrückelement kontaktierenden Wälzkörpern;
- Fig. 6: eine weitere Ausführungsform des Andrückelements.

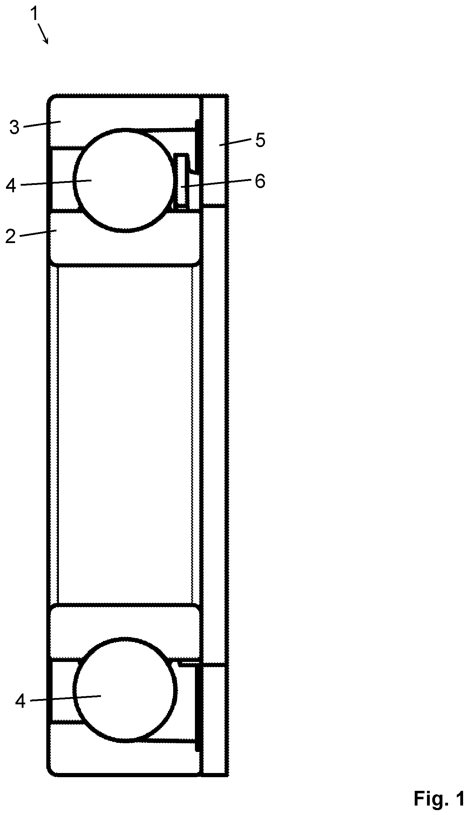

Fig. 1 zeigt ein käfigloses Wälzlager 1 in einer Schnittdarstellung. Das Wälzlager weist einen Innenring 2 und einen konzentrisch zum Innenring 2 angeordneten Außenring 3 auf. Zwischen dem Innenring 2 und dem Außenring 2 ist ein ringförmiger Lagerinnenraum gebildet. In diesem Lagerinnenraum sind in Umfangsrichtung äquidistant Wälzkörper 4 verteilt. Den axialen Abschluss auf der in Fig. 1 rechten Seite des Wälzlagers 1 bildet eine ringförmige Deckscheibe 5. Zwischen dieser Deckscheibe 5 und den Innenring 2 und/oder dem Außenring 3 können in den Figuren nicht näher dargestellte Dichtelemente vorgesehen sein.

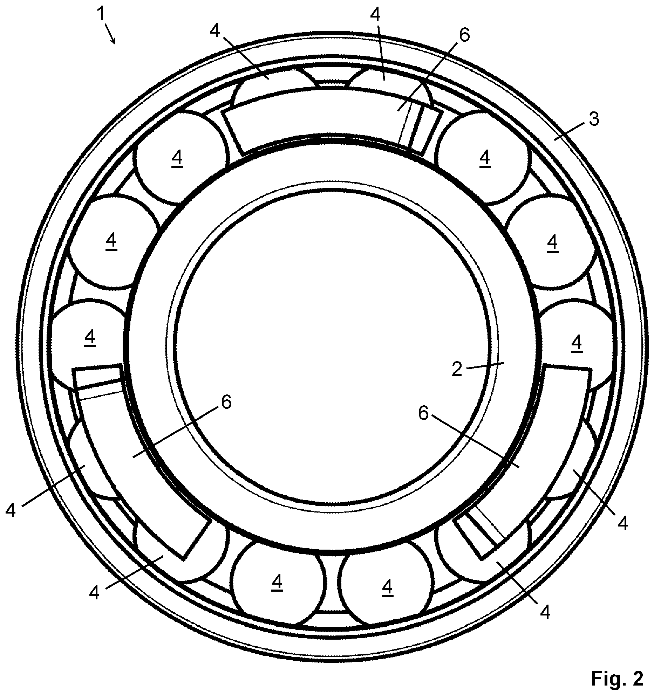

Fig. 2 zeigt eine Frontansicht des Wälzlagers 1 aus Fig. 1, wobei aus Übersichtlichkeitsgründen die Deckscheibe 5 nicht dargestellt wird. Zusätzlich zu dem Innenring 2, dem Außenring 3, den Wälzkörpern 4 und der Deckscheibe 5 weist das Wälzlager 1 insgesamt drei Andrückelemente 6 auf.

Die Andrückelemente 6 sind an der Deckscheibe 5 befestigt und äquidistant in Umfangsrichtung verteilt. Jedes Andrückelement 6 besitzt dabei eine ringsegmentartige Grundform und bedeckt entsprechend ein Ringsegment des Lagerinnenraums. Jedes Andrückelement 6 überdeckt dabei einen derart großen Winkelbereich, dass zeitweise mindestens zwei Wälzkörper 4 gleichzeitig durch das Andrückelement 6 kontaktiert werden. Jedes Andrückelement 6 beaufschlagt hierbei die kontaktierten Wälzkörper 4 mit einer in axiale Richtung orientierten Kraft. Genauer beaufschlagen die Andrückelemente 6 die Wälzkörper 4 mit einer axialen Kraft, die in Fig. 1 von rechts nach links gerichtet ist. Die Wälzkörper 4 werden somit durch die Andrückelemente 6 in Richtung der Schulter des Außenrings 3 gedrückt.

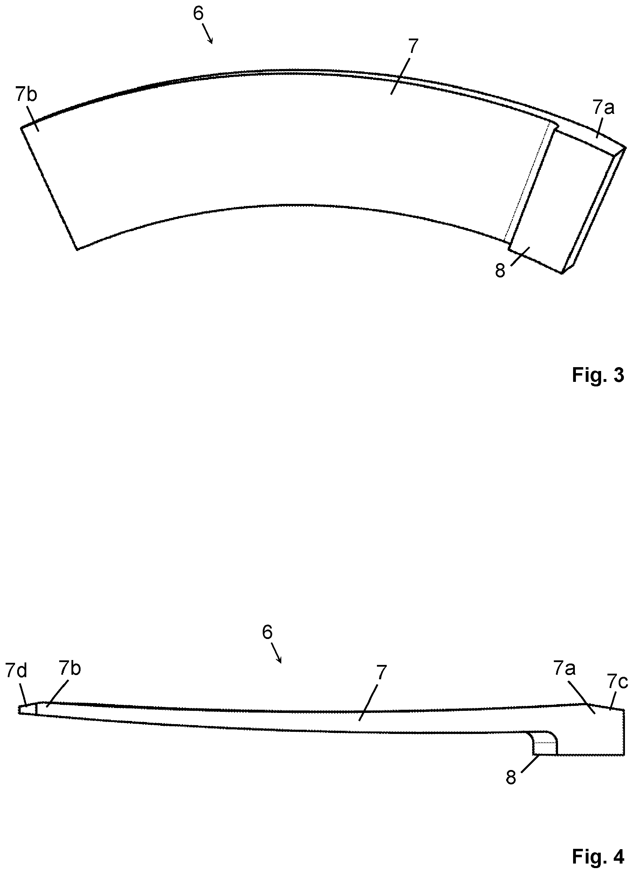

Fig. 3 und Fig. 4 zeigen das Andrückelement 6 aus Fig. 1 und Fig. 2 in Alleinstellung. Fig. 4 zeigt das Andrückelement 6 aus der gleichen Perspektive wie Fig. 2. Fig. 3 stellt eine Seitenansicht des Andrückelements 6 dar.

Das Andrückelement 6 weist eine Andrückzunge 7 und einen Fortsatz 8 auf. Der Fortsatz 8 ist an einem ersten Endbereich 7a der Andrückzunge 7 ausgebildet und dient der Befestigung des Andrückelements 6 an der Deckscheibe 5. Das Andrückelement 6 ist somit in dem ersten Endbereich 7a gelagert. Der dem ersten Endbereich 7a gegenüberliegende zweite Endbereich 7b der Andrückzunge 7 ist als freitragendes Ende ausgebildet. D.h. der zweite Endbereich 7b ist nicht gelagert. Der Querschnitt der Andrückzunge 7 verjüngt sich beginnend vom ersten Endbereichs 7a in Richtung des zweiten Endbereichs 7b. Genauer verringert sich die Dicke der Andrückzunge 7, während die Breite der Andrückzunge 7 konstant bleibt. Im ersten Endbereich 7a ist ein abgeschrägter Anlaufbereich 7c ausgebildet. Im zweiten Endbereich 7b ist ein abgeschrägter Auslaufbereich 7d ausgebildet. Wie insbesondere in Fig. 4 dargestellt, ist die Andrückzunge 7 gebogen bzw. gewölbt ausgebildet.

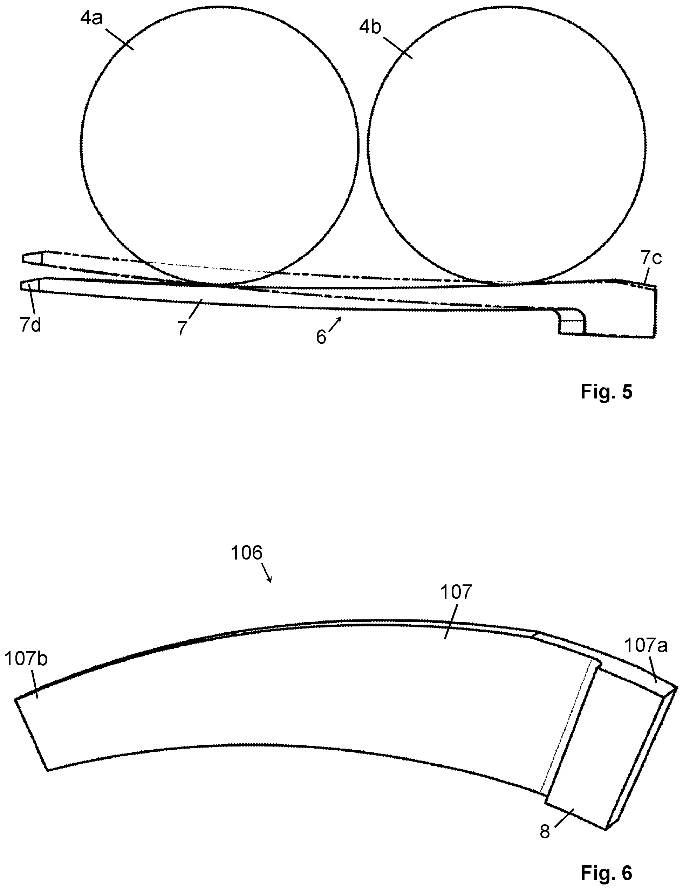

Fig. 5 zeigt schematisch das Funktionsprinzip des käfiglosen Wälzlager 1. Es sind ein Andrückelement 6 und beispielhaft zwei Wälzkörper 4a, 4b dargestellt. Die gestrichelte Position würde das Andrückelement 6 einnehmen, wenn die Wälzkörper 4a und 4b nicht vorhanden wären. Durch die beiden Wälzkörper 4a, 4b wird das Andrückelement 6 in die mit durchgehenden Linien gezeigten Position gedrückt. Gleichzeitig bewirkt das Andrückelement 6 eine entsprechende Gegenkraft auf die die beiden Wälzkörper 4a und 4b. Diese Gegenkraft entspricht der Kraft in axiale Richtung, mit der das Andrückelement 6 die Wälzkörper 4 beaufschlagt.

Während des Betriebs (d.h. während der Rotation) des Wälzlagers 1 stellt der Wälzkörper 4a einen voreilenden Wälzkörper und der Wälzkörper 4b einen nacheilenden Wälzkörper dar. Zunächst kam also der Wälzkörper 4a im Bereich des Anlaufbereichs 7c mit dem Andrückelement 6 in Kontakt und bewegt sich dann vom ersten Endbereich 7a beginnend in Richtung des zweiten Endbereichs 7b fort. Der nacheilende Wälzkörper 4b kam entsprechend später im Bereich des Anlaufbereichs 7c mit dem Andrückelement 6 in Kontakt und bewegt sich ebenfalls vom ersten Endbereich 7a beginnend in Richtung des zweiten Endbereichs 7b fort. Zunächst wird der vorauseilende Wälzkörper 4a den zweiten Endbereich 7b erreicht haben und dann über den Auslaufbereich 7d den Kontakt mit dem Andrückelement 6 verlieren. Gleichzeitig wird bereits der dem Wälzkörper 4b nachfolgende Wälzkörper 4 den Anlaufbereich 7c passiert haben. Der Wälzkörper 4b wird dann entsprechend der vorauseilende Wälzkörper für diesen neuen nacheilenden Wälzkörper, usw.

Ist nun beispielsweise der Abstand zwischen dem vorauseilenden Wälzkörper 4a und dem nachfolgenden Wälzkörper 4b geringer als der theoretische Abstand, der sich aufgrund einer äquidistanten Verteilung der Wälzkörper 4 ergeben sollte, so ist die abbremsende Wirkung des Andrückelements 6 auf den vorauseilenden Wälzkörper geringer. Der Abstand zwischen den Wälzkörpern 4a und 4b würde sich entsprechend vergrößern. Ist der Abstand zwischen dem vorauseilenden Wälzkörper 4a und dem nachfolgenden Wälzkörper 4b hingegen größer als der theoretische Abstand, so ist die abbremsende Wirkung des Andrückelements 6 auf den vorauseilenden Wälzkörper 4a größer. Der Abstand zwischen den Wälzkörpern 4a und 4b würde sich entsprechend verringern.

Der Abstand zwischen den Wälzkörpern 4a und 4b wird somit auf den theoretischen Abstand eingeregelt. Ein Kontakt zwischen benachbarten Wälzkörpern 4a und 4b während des Betriebs des Wälzlagers 1 wird damit zuverlässig verhindert.

Fig. 6 zeigt eine weitere Ausführungsform des Andrückelements. Das in Fig. 6 dargestellte Andrückelement 106 unterscheidet sich von dem in den vorhergehenden Figuren dargestellten Andrückelement 6 durch eine anders geformte Andrückzunge 107. Während die Andrückzunge 7 des Andrückelements 6 eine konstante Breite aufweist, besitzt das Andrückelement 107 eine sich verjüngende Breite. Genauer verringert sich die Breite des Andrückelements 107 beginnend am ersten Endbereich 107a in Richtung des zweiten Endbereichs 107b. Der zweite Endbereich 107b besitzt entsprechend einen kleineren Querschnitt als der erste Endbereich 107a. Auf diese Weise besitzt das Andrückelement 106 eine andere Elastizitätsverteilung bzw. ein anderes Biege-Widerstandsmoment als das Andrückelement 6.

In der in den Figuren dargestellten Ausführungsform sind die Wälzkörper 4 als Kugeln ausgebildet. Das Wälzlager 1 ist entsprechend als Kugellager, genauer als Schrägkugellager, ausgebildet. Es ist jedoch auch möglich, die Wälzkörper 4 zylinderförmig, also als Rollen bzw. Zylinder, auszubilden.

In der in den Figuren dargestellten Ausführungsform sind drei Andrückelemente 6 äquidistant verteilt angeordnet. Es ist jedoch auch möglich, eine andere Anzahl von Andrückelementen bzw. lediglich ein einziges Andrückelement 6 vorzusehen.

In der in den Figuren dargestellten Ausführungsform ist das Wälzlager 1 als vollkugeliges Wälzlager ausgebildet. Durch die nahezu vollständige Ausfüllung des Lagerinnenraums durch die Wälzkörper 4 wird eine hohe Tragfähigkeit erreicht. Es ist jedoch auch möglich, eine weniger dichte Packung der Wälzkörper 4 einzusetzen.

In der in den Figuren dargestellten Ausführungsform sind die Andrückelemente 6 mit der Deckscheibe 5 verbunden. Es ist jedoch auch möglich, die Andrückelemente 6 an einer anderen stationären bzw. stillstehenden Komponente des Wälzlagers oder mit einem benachbart zum Wälzlager angeordneten Halteteil zu verbinden. Ferner ist es auch möglich, das Andrückelement 6 an ein rotierendes Element des Wälzlagers 1, z.B. an den rotierenden Innenring 2 bzw. Außenring 3 anzuordnen.

In den in den Figuren dargestellten Ausführungsformen sind die Andrückelemente 6, 106 als Andrückelemente mit jeweils einer Andrückzunge 7 bzw. 107 ausgebildet. Der jeweils zweite Endbereich 7b bzw. 107b ist hierbei vollständig freitragend ausgebildet. Es ist jedoch auch möglich, den zweiten Endbereich 7b bzw. 107b nachgiebig zu fixieren.

Des Weiteren ist es auch möglich, ein bzw. mehrere Andrückelemente vorzusehen, das als wippenförmiges Andrückelement ausgebildet ist, welches in einem Mittelbereich gelagert ist und an beiden Endbereichen entweder nachgiebig fixiert oder freitragend ist. Eine derartige Ausgestaltung des Andrückelements ist insbesondere bei einer axial gegenseitigen Orientierung der Andrückkraft vorteilhaft.

### BEZUGSZEICHENLISTE

- 1: käfigloses Wälzlager
- 2: Innenring
- 3: Außenring
- 4, 4a, 4b: Wälzkörper
- 5: Deckscheibe
- 6, 106: Andrückelement
- 7, 107: Andrückzunge
- 7a, 107a: erster Endbereich
- 7b, 107b: zweiter Endbereich
- 7c: Anlaufbereich
- 7d: Auslaufbereich
- 8: Fortsatz

## Patentansprüche

1. Käfigloses Wälzlager (1) mit:
- einer Mehrzahl von Wälzkörpern (4), welche zwischen einem Innenring (2) und einem konzentrisch zum Innenring (2) angeordneten Außenring (3) in Umfangsrichtung verteilt angeordnet sind; und
- einem Andrückelement (6), welches
o ringsegmentartig entlang der Umfangsrichtung angeordnet ist,
o zumindest zeitweise mindestens zwei der Wälzkörper (4) gleichzeitig kontaktiert,
o jeden der kontaktierten Wälzkörper (4) mit einer in axiale Richtung orientierten Kraft beaufschlagt, und
o eine Andrückzunge (7) aufweist, die in einem ersten Endbereich (7a) gelagert ist und deren zweiter Endbereich (7b) als freitragendes Ende ausgebildet ist,
**dadurch gekennzeichnet, dass**:
- in dem ersten Endbereich (7a) ein abgeschrägter Anlaufbereich (7c) ausgebildet ist, und
- in dem zweiten Endbereich (7b) ein abgeschrägter Auslaufbereich (7d) ausgebildet ist.

2. Käfigloses Wälzlager (1) nach Anspruch 1, wobei der zweite Endbereich (7b) der Andrückzunge (7) nachgiebig fixiert ist.

3. Käfigloses Wälzlager (1) nach einem der Ansprüche 1 oder 2, wobei sich der Querschnitt der Andrückzunge (7), beginnend vom ersten Endbereich (7a) bis zum zweiten Endbereich (7b), verjüngt.

4. Käfigloses Wälzlager (1) nach einem der Ansprüche 1 bis 3, wobei die Andrückzunge (7) gewölbt ist.

5. Käfigloses Wälzlager (1) nach einem der vorhergehenden Ansprüche, wobei das Wälzlager (1) in axialer Richtung durch eine ringförmige Deckscheibe (5) abgeschlossen ist und das Andrückelement (6) an der Deckscheibe (5) angebracht ist.

6. Käfigloses Wälzlager (1) nach einem der vorhergehenden Ansprüche, wobei das Andrückelement (7) gleichzeitig höchstens zwei der Wälzkörper (4) kontaktiert.

7. Käfigloses Wälzlager (1) nach einem der Ansprüche 1 bis 5, wobei das Andrückelement (7) gleichzeitig höchstens drei der Wälzkörper (4) kontaktiert.

8. Käfigloses Wälzlager (1) nach einem der vorhergehenden Ansprüche, wobei mehrere Andrückelemente (6) äquidistant über den Umfang verteilt sind.

9. Käfigloses Wälzlager (1) nach einem der vorhergehenden Ansprüche, wobei das Wälzlager (1) ein Schrägkugellager ist.

## Claims

1. Cage-free rolling bearing (1) having:
- a plurality of rolling bodies (4) which are arranged circumferentially distributed between an inner ring (2) and an outer ring (3), which is arranged concentrically in relation to the inner ring (2); and
- a pressing element (6) which
o is arranged in a ring-segment-like manner along the circumferential direction,
o at least intermittently makes contact simultaneously with at least two of the rolling bodies (4),
o subjects each of the rolling bodies (4) with which contact is made to an axially oriented force, and
o has a pressing tongue (7) which is mounted in a first end region (7a) and whose second end region (7b) is in the form of a self-supporting end,
**characterized in that**:
- a bevelled run-on region (7c) is formed in the first end region (7a), and
- a bevelled run-off region (7d) is formed in the second end region (7b).

2. Cage-free rolling bearing (1) according to Claim 1, wherein the second end region (7b) of the pressing tongue (7) is fixed in a flexible manner.

3. Cage-free rolling bearing (1) according to either of Claims 1 and 2, wherein the cross section of the pressing tongue (7) narrows from the first end region (7a) to the second end region (7b).

4. Cage-free rolling bearing (1) according to one of Claims 1 to 3, wherein the pressing tongue (7) is curved.

5. Cage-free rolling bearing (1) according to one of the preceding claims, wherein the rolling bearing (1) is terminated axially by an annular cover disc (5) and the pressing element (6) is attached to the cover disc (5).

6. Cage-free rolling bearing (1) according to one of the preceding claims, wherein the pressing element (7) makes contact simultaneously with at most two of the rolling bodies (4).

7. Cage-free rolling bearing (1) according to one of the Claims 1 to 5, wherein the pressing element (7) makes contact simultaneously with at most three of the rolling bodies (4).

8. Cage-free rolling bearing (1) according to one of the preceding claims, wherein multiple pressing elements (6) are distributed equidistantly over the circumference.

9. Cage-free rolling bearing (1) according to one of the preceding claims, wherein the rolling bearing (1) is an angular-contact ball bearing.

## Revendications

1. Palier à roulement (1) sans cage comportant :
- une pluralité de corps de roulement (4), lesquels sont disposés de manière répartie dans la direction circonférentielle entre une bague intérieure (2) et une bague extérieure (3) disposée de manière concentrique par rapport à la bague intérieure (2) ; et
- un élément de pression (6), lequel
o est disposé à la manière d'un segment annulaire le long de la direction circonférentielle,
o vient en contact simultanément avec au moins deux des corps de roulement (4) au moins par intermittence,
o soumet chacun des corps de roulement (4) mis en contact à une force orientée dans la direction axiale, et
o une languette de pression (7) qui est montée dans une première région d'extrémité (7a) et dont la deuxième région d'extrémité (7b) est réalisée sous forme d'extrémité autoportante,
**caractérisé en ce que** :
- une région d'entrée (7c) inclinée est réalisée dans la première région d'extrémité (7a), et
- une région de sortie (7d) inclinée est réalisée dans la deuxième région d'extrémité (7b).

2. Palier à roulement (1) sans cage selon la revendication 1, dans lequel la deuxième région d'extrémité (7b) de la languette de pression (7) est fixée de manière souple.

3. Palier à roulement (1) sans cage selon l'une des revendications 1 ou 2, dans lequel la section transversale de la languette de pression (7) s'amincit, à partir de la première région d'extrémité (7a) jusqu'à la deuxième région d'extrémité (7b).

4. Palier à roulement (1) sans cage selon l'une des revendications 1 à 3, dans lequel la languette de pression (7) est bombée.

5. Palier à roulement (1) sans cage selon l'une des revendications précédentes, le palier à roulement (1) étant fermé dans la direction axiale par une plaque de recouvrement annulaire (5) et l'élément de pression (6) étant installé sur la plaque de recouvrement (5).

6. Palier à roulement (1) sans cage selon l'une des revendications précédentes, dans lequel l'élément de pression (7) vient en contact simultanément avec deux des corps de roulement (4) au plus.

7. Palier à roulement (1) sans cage selon l'une des revendications 1 à 5, dans lequel l'élément de pression (7) vient en contact simultanément avec trois des corps de roulement (4) au plus.

8. Palier à roulement (1) sans cage selon l'une des revendications précédentes, dans lequel plusieurs éléments de pression (6) sont disposés de manière répartie de façon équidistante sur la circonférence.

9. Palier à roulement (1) sans cage selon l'une des revendications précédentes, le palier à roulement (1) étant un palier à roulement à billes à contact oblique.
